Europäisches Patentamt

European Patent Office

Office européen des brevets

(19)

(11) EP 0 425 171 B1

# (12) EUROPEAN PATENT SPECIFICATION

(45) Date of publication and mention
of the grant of the patent:
**28.02.1996 Bulletin 1996/09**

(51) Int Cl.$^6$: **G06F 3/033**

(21) Application number: 90311365.2

(22) Date of filing: **17.10.1990**

(54) **Object identification in a display system**

Gegenstandidentifizierung in einem Anzeigesystem

Identification d'objet dans un système d'affichage

(84) Designated Contracting States:
**DE FR GB IT**

(30) Priority: **24.10.1989 US 426143**

(43) Date of publication of application:
**02.05.1991 Bulletin 1991/18**

(73) Proprietor: **International Business Machines
Corporation
Armonk, N.Y. 10504 (US)**

(72) Inventors:
• **Aranda, Michael Archangel
Saugerties, New York 12477 (US)**
• **Iida, Yoshio
Tokohama-shi, Kanagawa Prefecture, 240 (JP)**
• **Kamei, Akishi
Tokyo, 165 (JP)**

(74) Representative: **Burt, Roger James, Dr.
Winchester, Hampshire SO21 2JN (GB)**

(56) References cited:
**EP-A- 0 314 289          US-A- 4 451 895**

• **IBM TECHNICAL DISCLOSURE BULLETIN, vol.
29, no. 1, June 1986, pages 158-161, New York,
US; "Hardware clipping comparator"**

# EP 0 425 171 B1

## Description

The invention relates to the identification (eg picking) of a displayed object in a display system.

The problem of graphics object selection, or picking, is well known in the art of graphics display systems. Graphics display systems are used in computer-aided design (CAD) to represent mechanical drawings and resulting manufactured objects. Graphics display systems may also be employed for simulation purposes, including the use in aircraft, automobile, and military vehicle pilot or driver training devices. An example of a graphics display system is described in EP-A-0 314 289. The operator of a CAD system or developer of a simulator environment must provide the graphics instructions necessary to generate the required object on the graphics display screen. Displayed objects are then available for manipulation, modification, and deletion. The operator must have some method for communicating to the display system which of the displayed objects is being selected for manipulation.

Prior art systems provide several methods for communicating between the operator and the graphics display system. For example, Foley and Van Dam in <u>Fundamentals of Interactive Computer Graphics</u>, Addison-Wesley Publishing Co, 1982, pp 165-168, describe a pick identification process where a display processing unit (DPU) detects a light pen selection of the graphics object and communicates the name of a segment being drawn to the graphics controller. Foley and Van Dam also describe other pick schemes in the referenced material.

US Patent 4,847,605, filed 27 April 1987 entitled "Picking in a Graphics System", commonly assigned, describes the coordination between a picking window and the display generator. US Patent 4,451,895 to Sliwkowski, describes the process of picking and address correlation in a graphics display system. Each of these references describes a means and method for detecting which segment of a graphics object is referenced during an operator initiated pick request. Each of the references provides a means for comparing the location of the pick window or pick selection point to the graphics object. In each of these cases it is assumed that the graphics object is being generated one point at a time. The picking function in the above references either tests each individual point as it is generated, or compares the address of the pick window to the addresses of the segments in display memory. None of these references address the problem of picking in a parallel processing environment where a number of pixels may be generated for display in parallel.

The present invention is directed to providing a solution to the identification (eg. picking) of an object in a display system which is applicable to a parallel processing environment.

In accordance with a first aspect of the invention, there is provided a method for detecting generation of an image within an operator defined display area, wherein a plurality of image picture elements are generated by a display system during each processing cycle for display on a display device having a plurality of picture element positions, said plurality of image picture elements representing an image fragment said method comprising the steps of:

classifying the image fragment as totally within, totally outside or intersecting said operator defined area;

generating a true detection signal if said fragment is totally within said area;

generating a false detection signal if said fragment is totally outside said area;

performing the following steps if said fragment intersects said area;

generating a mask fragment for each boundary of said operator defined area, said mask fragment representing an edge of said operator defined area;

masking said image fragment with each of said mask fragments;

logically combining said masked image fragments;

generating a true detection signal if said logical combination contains non-zero values or otherwise, generating a false detection signal.

In accordance with a second aspect of the invention, there is provided apparatus for detecting generation of an image within an operator defined display area, wherein a plurality of image picture elements are generated by a display system during each processing cycle for display on a display device having a plurality of picture element positions, said plurality of image picture elements representing an image fragment, said apparatus comprising: means for classifying the image fragment as totally within, totally outside or intersecting said operator defined area; means for generating a true detection signal if said fragment is totally within said area; means for generating a false detection signal if said fragment is totally outside said area; means for generating a mask fragment for each boundary of said operator defined area if said fragment intersects said area, said mask fragment representing an edge of said operator defined area;

2

means for masking said image fragment with each of said mask fragments; means for logically combining said masked image fragments; and, means for generating a true detection signal if said logical combination contains non-zero values or otherwise, generating a false detection signal.

An example of the present invention will be described hereinafter with reference to the accompanying drawings, in which:

Fig 1 is a block diagram illustrating a graphics display system of the type employing the present invention;

Fig 2 is a block diagram illustrating the relationship between pick logic and the display processor logic;

Fig. 3 is an illustration of a pick window according to the present invention;

Fig. 4 is a block diagram representing a prior art pick detection logic;

Fig. 5 is an illustration of the scope of pixel drawing in devices which employ the present invention;

Fig. 6 is an illustration of the relationship between a pick window and line fragments and is used in discussing the preferred embodiment of the present invention;

Fig. 7 is a block diagram of pick logic according to the present invention;

Fig. 8 is a block diagram of the masking logic employed by the present invention;

Fig. 9 is an illustration of the relationship between pick window projections and line fragments;

Fig. 10 is a block diagram of the block address comparator logic; and

Fig. 11 is a block diagram of the address generation logic employed in the present invention;

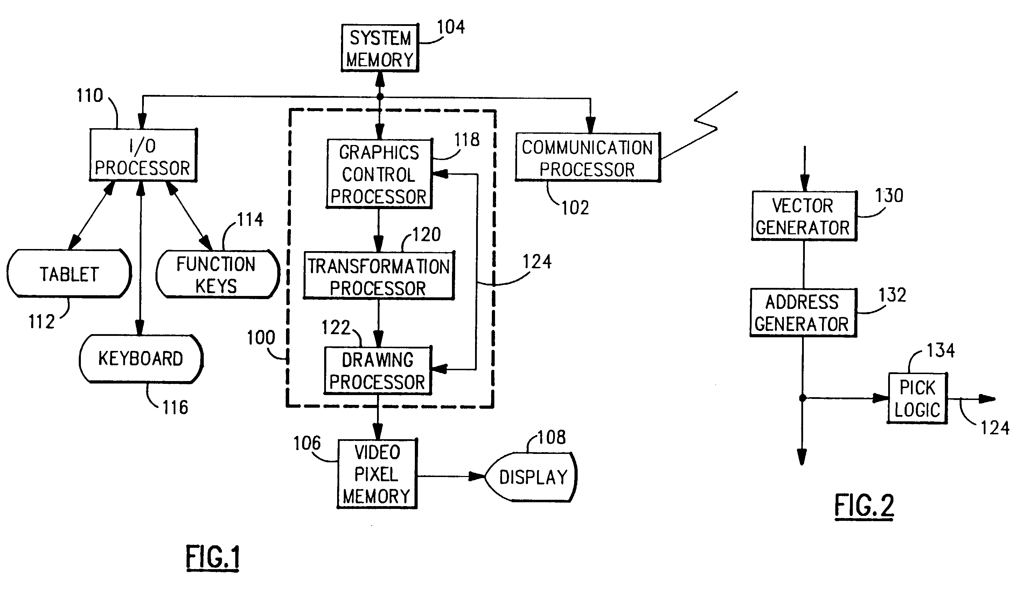

A graphics processing system is shown in Fig. 1. The graphics display system has a display processor 100 that is used to perform the processing necessary to create an image for display.

Communications processor 102 is optionally attached to a remote processor for transferring data and graphics orders to the display processing unit. Graphics orders and graphics data are stored in system memory 104.

Display processor 100 accesses the display processing orders in system memory 104 and generates an output image into video pixel memory 106. The image from video pixel memory 106 is used to generate an output image on a raster scan display device such as display terminal 108. Display output could also be generated for printers or plotters that accept a raster scanned image.

Input/Output processor 110 is provided to control the interaction between the graphics display system and an operator. The I/O processor 110 may be attached to a variety of input or output devices such as a tablet with a stylus 112, a set of function keys 114, or a keyboard 116.

The display processor 100 is made up of several sub-component processors. Graphic control processor 118 accesses the graphics orders and data in system memory 104 and receives I/O directives from I/O processor 110. Graphics control processor 118 generates commands to be executed by transformation processor 120 to perform transformations on a graphics object. Transformations may include scaling, rotation, or translation of an object to appear on a display device. The output from transformation processor 120 is directed to drawing processor 122 which generates the output points to be written to video pixel memory 106. Drawing processor 122 is also directly responsive to graphic control processor 118 via command line 124. Drawing processor 122 includes the pick logic necessary to detect the picking of an object in response to an operator pick reguest.

Drawing processor 122 is shown in greater detail in Fig. 2. Vector generator 130 interprets the transformed graphics order from transformation processor 120 and generates the signals necessary to draw the requested object. The signals are typically presented as increments in the X and Y direction that will result in the required final image. The incremental signals are passed to address generator 132 which generates the actual address in video pixel memory 106 to which a pixel must be written. The output of address generator 132 is directed to video pixel memory 106 and to pick logic 134. Pick logic 134, in the prior art systems, examines the addresses and detects the presence of an address within a pick window. A signal 124 is sent to the graphics control processor indicating an operator selection or pick.

Picking refers to the process of selecting a graphic object such as a line, polygon, character, or segment from the image on a display device. An operator controlled selection device, such as a cursor controlled by a tablet and stylus, mouse, cursor control keys, or a light pen, touch screen, or other device is used by the operator to communicate a location on the display device containing an object the operator wishes to process. Picking logic is necessary to translate the physical operator indication into a frame of reference that can be compared by the graphics display system. Once the display device location has been determined, the graphics display system must determine which graphics object is present at that location and then communicate that selection to the graphics control processor 118. Once selection has occurred, the operator may initiate further graphic control actions against the selected object. These actions can include modification of the object, deletion of the object, movement of the object, or a change of object attributes such as color.

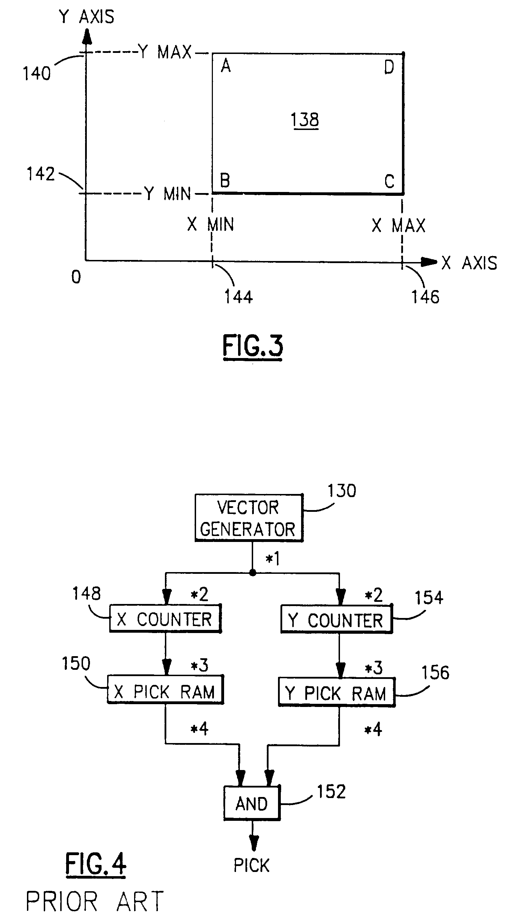

An operator is usually unable to position a selector device precisely on a single pixel for selection. A pick window of, for example, four pixels by four pixels is typically defined which allows a pick to occur through approximate positioning of the operator controlled selection device. A pick window is shown in Fig. 3. Pick window 138 can be defined in terms of four corner points that define the X and Y axis boundaries of the area to be searched to identify the picked object. These points are Ymax 140, Ymin 142, Xmin 144, and Xmax 146.

Prior art pick selection logic relied upon the projection of the pick window onto the X and Y axes for selection of a picked object. The extent of the pick window can be represented in a pick RAM by setting the bits corresponding to the extent of the pick window to one. For example, in a display device with a 1024 x 1024 display format, an X pick RAM can be defined as 1 x 1024 and a Y pick RAM as a second 1 x 1024 area. For a 4x4 pick window, the extent of the pick window in each RAM can be defined by placing a 1 in the four pixel positions corresponding to the screen location of the pick window. The pick window of Fig. 3 can be projected onto the X axis extending between Xmin 144 and Xmax 146 and onto the Y axis between Ymin 142 and Ymax 140.

A prior art pick detect circuit is shown in Fig. 4. Vector generator 130 outputs the incremental X and Y pixel drawing orders. X counter 148 is responsive to an order to increment the X address. The output of X counter is used to address X pick RAM 150. The value of the bit addressed in X pick RAM is passed to AND circuit 152. Similarly Y counter 154 is incremented by a Y increment order addressing Y pick RAM 156 that passes a value to AND circuit 152. If the value in both the X pick RAM and Y pick RAM is 1 the result from AND circuit 152 is a pick signal of 1 indicating that the object lies within the pick window.

A major disadvantage of the prior art picking scheme is the need to maintain an X and Y pick RAM. As the size of the display device increases, the amount of memory that must be devoted to these RAMs also increases. Clearing and setting up pick RAMs in prior art systems requires more than one machine cycle per bit of pick RAM, e.g., a 1024 pick RAM would require more than 1024 machine cycles to clean and set up. Second, the pick detection logic of the prior art is designed to detect the pick as a single pixel is being drawn. In advanced graphics systems, parallel processing is implemented so that a number of pixels are drawn in each clock cycle. This parallel processing is required to provide increased speed for high function graphics workstations.

Parallel pixel generation involves the generation of multiple pixels to video pixel memory 106 in a single clock cycle. The set of pixels represent a fragment of the line or other object being generated by the display processor. An example of one technique for generating multiple pixels is presented in the U.S. patent application Serial No. 07/115,451, filed October 30, 1987 and commonly assigned. The parallel pixel generator may generate, for example, four pixels to the video pixel memory. The picking problem therefore becomes testing to determine whether any of those pixels fall within the pick window.

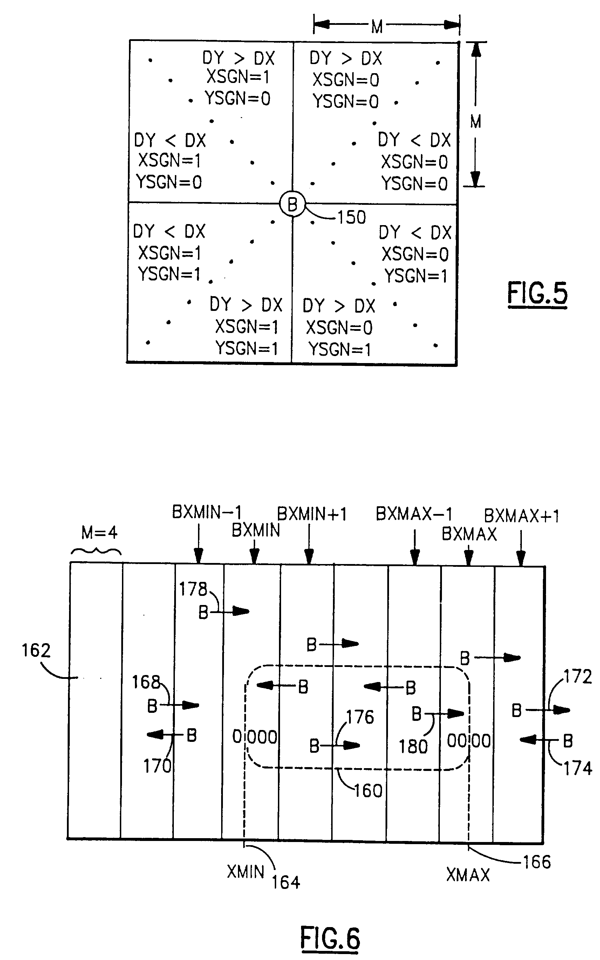

A definition of terms used in the following discussion of the invention follows. The multiple pixels drawn by the parallel vector generator will be termed a "fragment". Each fragment will consist of M pixels to be drawn in the video pixel memory. Frequent orientation will be represented by a series of parameters. Fig. 5 illustrates the potential extent of a fragment originating at point b 150 from a line having a slope of DY/DX. The line fragment is expressed by a set of binary variables. The variable WPIX indicates whether the position should be written (1) or not (0). XPOS and YPOS represent the position change enable variables along the X and Y axes respectively. A 1 indicates that an increment or decrement along the axis will occur. XSGN and YSGN indicate whether an increment (0) or decrement (1) will occur. Each fragment will have a single XSGN and YSGN and M values of XPOS, YPOS, and WPIX. This output fragment will be transmitted to the video pixel memory and to pick logic 134. For example, in the situation where DY is less and DX and XSGN = 0 and YSGN = 0, XPOS 0-3 of 1111 and YPOS 0-3 of 1010 would result in the following fragment pattern (b indicates the beginning point for the fragment):

```
          x x
       x x
    b
```

If a fragment cannot be classified as trivially in or out, a more detailed analysis must be undertaken.

Fig. 6 will be used to describe the concept of trivial acceptance or rejection (trivial in and trivial out). Fig. 6 illustrates a portion of a raster scan display. A pick window 160 is defined by the dotted line boundaries shown. Pick detection logic attempts to determine when a line fragment will be drawn within the pick window. This discussion will consider projection and analysis along the X axis; an analysis of Y axis projection is equivalent. The screen segment is divided up into a number of blocks, for example 162, each having a width of M pixels. In one embodiment M = 4 and the screen area is logically divided into four pixel blocks. The boundaries of the pick window 160 are projected onto the X axis at points Xmin 164 and Xmax 166. The block containing Xmin can then be labeled BXmin with the blocks on either side labeled BXmin-1 and BXmin+1 respectively. Similarly the blocks BXmax, BXmax-1, and BXmax+1 are labeled. These designations are used to analyze the line fragment to determine whether it should be trivially accepted or trivially rejected.

Each line fragment represents M pixels. Thus, each line fragment will be either totally within one block or crossing at most one block boundary. Line fragments are shown in Fig. 6 based on the beginning point, b, and an arrow representing direction of the line fragment. A line fragment beginning in a block less than BXmin-1 and proceeding in a positive direction, for example fragment 168, will never intersect the pick window and therefore can be trivially designated as outside the pick window. No further analysis is required. Similarly line 170, drawn in the negative X direction will not intersect the BXmin and therefore can be designated as trivially outside the pick window. A similar analysis applies to Xmax as shown by the example lines 172 and 174.

A segment beginning at a block greater than BXmin and less than BXmax-1, for example, fragment 176, can be designated as a "trivial in" in the X dimension. Where trivial in (X) AND trivial in (Y) is true the fragment is classified as "trivial in" and requires no further analysis. Where trivial out (X) AND trivial out (Y) is true, the fragment is designated "trivial out".

The process of detecting trivial in and trivial out fragments reduces the amount of analysis required for each fragment. As a result of eliminating those fragments totally outside or totally within the window, the analysis may be focused on those segments which intersect the projected pick window, for example segments 178, 180 in the figure.

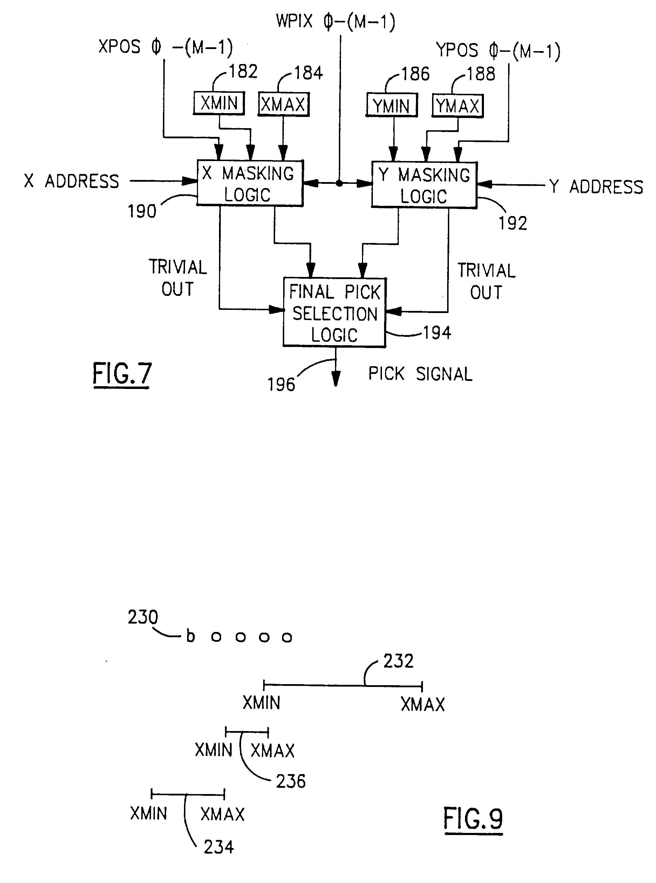

A block diagram showing the overall structure of pick logic according to the present invention is shown in Fig. 7. The preferred embodiment of the present invention is constructed using gate array logic to implement the logic functions specified. It will be clear to those practitioners in the field that alternate implementations of this logic are possible. For example, the process could be implemented totally in software, though without the added processing speed advantages of the hardware implementation.

Implementation of the preferred embodiment using gate arrays has the advantage of reducing the number of processing cycles required to detect a picking action. Prior art devices employing static random access memory (SRAM) required a large number of cycles to update the pick RAM. In a typical 16x16 pixel window, 32 clock cycles are required to update the pick RAM. In the present invention only four registers must be updated, the Xmin, Xmax, Ymin, and Ymax registers requiring only four cycles. In addition, the preferred embodiment of the present invention is implemented using a pipelined architecture so that a pick output is generated during each processing clock cycle.

Fig. 7 illustrates the detail of pick logic 134 shown in Fig. 2. The boundaries of the pick window are loaded into registers 182, 184, 186 and 188 representing Xmin, Xmax, Ymin and Ymax respectively. The Xmin, Ymin, Xmax, and Ymax registers are loaded by the processing unit when a command to update the pick window value is received from the pick device. The number of signals from the min or max registers are nx which represents the number of bits required to address a point on the display along the X axis, and ny (number of bits required to address a point on the display device along the Y axis) for X and Y respectively. The vector generator and address generator provide the other input values required by the pick logic. As discussed above, vector generator provides the values of XPOS0-(M-1), YPOS0-(M-1) and WPIX0-(M-1). An address generator provides the X address and Y address for beginning point b. The address generator generates and keeps the address of the reference point of fragments and is loaded by the processor when a line is first started. Then the address is incremented by 0, 1, 2, ... or m, according to the number of valid outputs from the parallel vector generator. Pick logic according to the present invention is divided into X masking logic 190 and Y masking logic 192. Each of these logic sections is identical serving to mask the WPIX values based upon the respective min and max boundaries, the position values and the address. Outputs of the X masking logic and Y masking logic are compared in final pick selection logic 194 leading to the generation of pick signal 196. Trivial in selection occurs within the X and Y masking logic sections 190, 192 while trivial out selection occurs in the final pick selection logic 194.

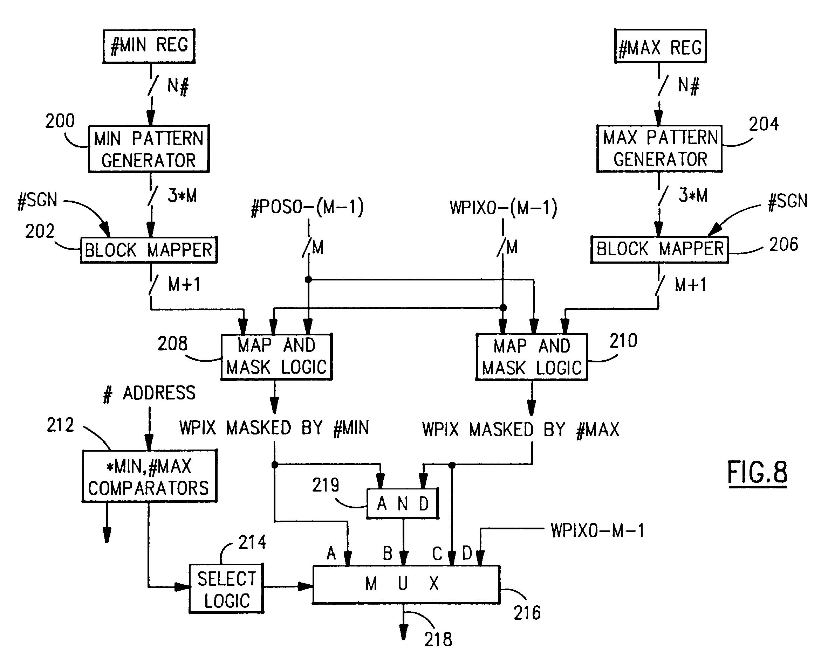

A detailed block diagram of X masking logic 190 and equivalent Y masking logic 192 is shown in Fig. 8. Min pattern generator 200 and associated block mapper 202 are used to generate the pattern used to mask WPIX based upon the Xmin or Ymin values. Similarly max pattern generator 204 and associated block mapper 206 are used to generate the max pattern for masking. Map and mask logic 208 performs the masking based on the min value while logic 210 performs masking based on the max value. Min and max comparators 212 compare the address value provided to generate trivial in and trivial out signals which drive select logic 214 (for trivial in) which in turn performs selection by a multiplexer 216. A trivial in case causes WPIX0-(M-1), (input d) to be passed unchanged to output 218.

Min pattern generator 200 generates a bit pattern encompassing the minimum limit of the pick window, Xmin. The generated pattern is 3*M bits long and spans the defined blocks Bxmin-1, BXmin, and BXmin+1. Thus, in the preferred embodiment where M=4, a pattern of 12 bits will be generated. Bits less than Xmin are 0 while bits greater than or equal to Xmin are 1.

Block mapper 202 first tests the XSGN or YSGN value to determine whether the fragment is being drawn in a positive or negative direction. If the SGN value indicates negative drawing direction, then the order of the bits in the pattern is inverted (e.g. pattern 0000 0001 1111 becomes pattern 1111 1000 0000). Finally, block mapper selects M+1 bits which correspond to the position of the fragment located at pixels b, 0, 1, ... M-1. The output of the block mapper is a mask of M+1 pixels that will be used to map M+1 WPIX pixels in the map mask logic 208. The pattern selection logic employed in the block mapper 202 and 206 consists of a series of M+1 multiplexers which select M+1 points from the 3*M points of the generated pattern. If the SGN value indicates positive drawing direction, then the selection is based upon the least significant "bm" address bits; otherwise, the selection is based upon the INVERSE of the least significant "bm" address bits. (bm is the number of bits required to represent M, the length of the segment. In the preferred embodiment bm = 2.)

Max pattern generator 204 and block mapper 206 operate similarly to the min pattern generator. Max pattern generator 204 generates 3*M pixels bounding Xmax or Ymax with positions less than or equal to max being set to 1 while positions greater than max are set to 0. Block mapper 206 performs a similar inversion based upon SGN and provides M+1 mask pixels to map and mask logic 210.

Map and mask logic 208 and 210 are similarly constructed. Position signals 0 through M-1, WPIX0 through M-1 and the output of the block mapper (B, 0, 1, ... (m-1)) are used as inputs. The output of the map and mask logic is WPIX --- MASKED WPIX. The following truth table describes the logic: (please note: the logic applies to Xmin, Xmax, Ymin and Ymax. # represents X or Y. & represents the Boolean function AND.)

| #pos(0..3) | WPIXm0 | WPIXm1 | WPIXm2 | WPIXm3 |
|---|---|---|---|---|
| 0000 | WPIX0 & B | WPIX1 & B | WPIX2 & B | WPIX3 & B |
| 0001 | WPIX0 & B | WPIX1 & B | WPIX2 & B | WPIX3 & B |
| 0020 | WPIX0 & B | WPIX1 & B | WPIX2 & B | WPIX3 & 0 |
| 0011 | WPIX0 & B | WPIX1 & B | WPIX2 & B | WPIX3 & 0 |
| 0100 | WPIX0 & B | WPIX1 & B | WPIX2 & 0 | WPIX3 & 0 |
| 0101 | WPIX0 & B | WPIX1 & B | WPIX2 & 0 | WPIX3 & 0 |
| 0110 | WPIX0 & B | WPIX1 & B | WPIX2 & 0 | WPIX3 & 1 |
| 0111 | WPIX0 & B | WPIX1 & B | WPIX2 & 0 | WPIX3 & 1 |
| 1000 | WPIX0 & B | WPIX1 & 0 | WPIX2 & 0 | WPIX3 & 0 |
| 1001 | WPIX0 & B | WPIX1 & 0 | WPIX2 & 0 | WPIX3 & 0 |
| 1010 | WPIX0 & B | WPIX1 & 0 | WPIX2 & 0 | WPIX3 & 1 |
| 1011 | WPIX0 & B | WPIX1 & 0 | WPIX2 & 0 | WPIX3 & 1 |
| 1100 | WPIX0 & B | WPIX1 & 0 | WPIX2 & 1 | WPIX3 & 1 |
| 1101 | WPIX0 & B | WPIX1 & 0 | WPIX2 & 1 | WPIX3 & 1 |
| 1110 | WPIX0 & B | WPIX1 & 0 | WPIX2 & 1 | WPIX3 & 2 |
| 1111 | WPIX0 & B | WPIX1 & 0 | WPIX2 & 1 | WPIX3 & 2 |

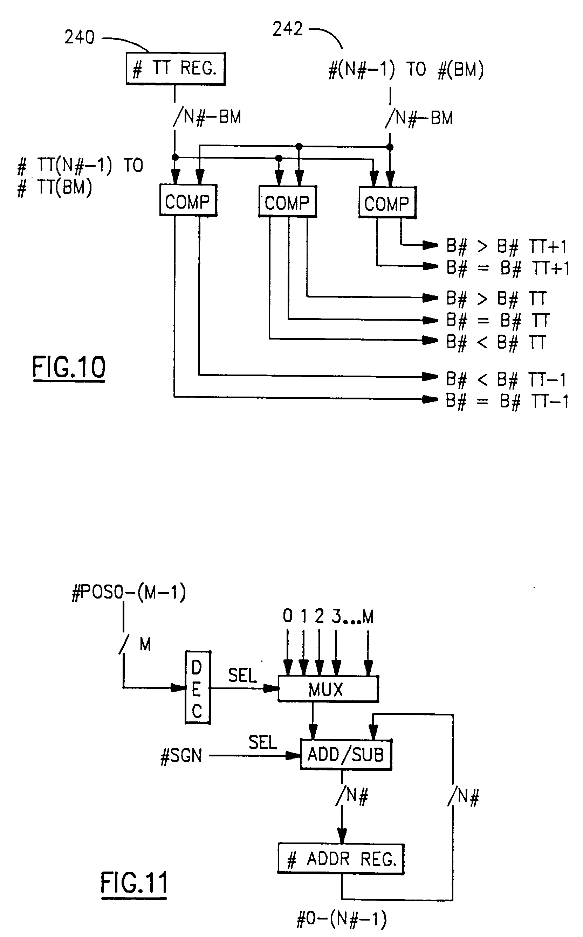

Multiplexer 216 selects the mask WPIX output 218 to be passed to final selection logic 194. The multiplexer must consider four cases. The first case is the trivial in selection where detailed analysis of the fragment location is not required. Trivial in selection results in the values of WPIX0-(M-1) being passed to output 218 unchanged. The other three conditions depend upon the relation of Xmin and Xmax to the fragment. A fragment 230 is shown in Fig. 9. In the first case a pick window extent 232 along the X axis is shown between Xmin and Xmax. In this case only Xmin divides fragment 230 and therefore WPIX masked by min is passed to WPIX output 218. In the second case, Xmin and Xmax 234, only Xmax divides fragment 230 and the values of WPIX masked by max are passed to WPIX 218. Finally in the condition shown by segment 236, both Xmin and Xmax divide fragment 230. In this case AND logic 219 is employed to combine the masked WPIX values and the resulting combined value passed to WPIX value 218.

Select logic 214 that controls the multiplexer is driven by min and max comparators 212. Fig. 10 illustrates the comparator logic employed. A total of four comparators would exist, one each for Xmin, Xmax, Ymin, and Ymax. In the figure, # represents X or Y, and TT represents min or max. The comparators compare the register value 240, e.g. Xmin, to the address 242 and generates bit signals indicating the results of the comparison. The output signal indicates the relative position of the block containing the address (b#, e.g. bX) to the min or max blocks, (b#TT+1, e.g. bXmin+1) and is used by selector logic 214 to generate the trivial in selection signal or the trivial out selection signal.

The logic to generate the signal is based upon the following defined terms where # represents X or Y.

$$\#min+ = (b\#=b\#min) \text{ or } (b\#=b\#min-1)$$
$$\#max+ = (b\#=b\#max) \text{ or } (b\#=b\#max-1)$$
$$\#min- = (b\#=b\#min) \text{ or } (b\#=b\#min+1)$$
$$\#max- = (b\#=b\#max) \text{ or } (b\#=b\#max+1)$$
$$trivin+\# = (b\# > b\#min) \text{ and } (b\# < b\#max-1)$$
$$trivin-\# = (b\# > b\#min+1) \text{ and } (b\# < b\#max)$$

Selection logic 214 uses the following logic table to generate a selection signal to multiplexer 216. Select values shown in the table corresponds to multiplexer 216 input line labels.

```
#sgn      | 0  1 | 0  1 | 0  1 | 0  1 | h: don't care

#min+     | 1  h | 0  h | 1  h | h  h |

#max+     | 0  h | 1  h | 1  h | h  h |

#min-     | h  1 | h  0 | h  1 | h  h |

#max-     | h  0 | h  1 | h  1 | h  h |

trivin+#  | 0  h | 0  h | 0  h | 1  h |

trivin-#  | h  0 | h  0 | h  0 | h  1 |

          |      |      |      |      |

Select    | a  a | c  c | b  b | d  d |
```

Finally, trivial out values determined from the comparators according to the following logic equation.

$$\text{trivout} = (bx < bxmin-1) \text{ or } (bx > bmax)$$
$$\text{or } (bx < bxmin) \text{ or } (bx > bxmax+1)$$
$$\text{or } (by < bymin-1) \text{ or } (by > bymax)$$
$$\text{or } (bx < bymin) \text{ or } (bx > bymax+1)$$

When trivial out is 1, a pick signal 196 of 0 (no pick) is generated by final pick selection logic 194 regardless of the result of the masking operations.

Fig. 11 shows additional detail for address generation logic 132. Address generators are provided for both X and Y addresses and are controlled by position movement values XPOS or YPOS. The address counters are incremented according to the number of 1 values in #POS0-(M-1).

There has been described, apparatus and methods for detecting the operator selection of a graphics object (picking) in a graphics display system, in particular, to picking in a graphics display system that employs parallel processing to generate multiple pixels on the graphics display during a single processing cycle. The described approach is directed to a graphics display system where picking occurs during the vector generation process.

Thus, the operator selection or picking of an object can be detected in a graphics system employing parallel pixel generation. Picking can be detected without adding overhead to the graphics processor. Picking can be performed accurately with a low pick error rate. Pick selection can be implemented without using random access memory for intermediate storage, and without the need for adding additional random access memory to the system.

Though an example of the invention has been described above for use in a picking environment, similar structure and apparatus can be used to provide scissoring, that is, the ability to display only the area inside a large defined window. The scissored window would be represented as the pick window. Pick function selection logic 194 would be modified for scissoring so that WPIX0-(M-1) is output based upon logical ANDing of the outputs from X masking logic and Y masking logic 190 and 192. This final WPIX output would replace the single binary valued pick signal 196 generated in the present embodiment.

The example of invention has been described in terms of two-dimensional picking. However, the techniques described and the apparatus employed in the above description can be extended to allow three-dimensional picking. The logic provided for X and Y axes can be replicated to include a Z axis analysis with the necessary additional logic for combining the results from that extra axis.

**Claims**

1. A method for detecting generation of an image within an operator defined display area, wherein a plurality of image picture elements are generated by a display system during each processing cycle for display on a display device having a plurality of picture element positions, said plurality of image picture elements representing an image fragment said method comprising the steps of:

classifying the image fragment as totally within, totally outside or intersecting said operator defined area;

generating a true detection signal if said fragment is totally within said area;

generating a false detection signal if said fragment is totally outside said area;

performing the following steps if said fragment intersects said area;

generating a mask fragment for each boundary of said operator defined area, said mask fragment representing an edge of said operator defined area;

masking said image fragment with each of said mask fragments;

logically combining said masked image fragments;

generating a true detection signal if said logical combination contains non-zero values or otherwise, generating a false detection signal.

2. A method as claimed in claim 1 wherein said plurality of picture element positions on said display device are divided into blocks containing the same number of picture elements as said image fragment; and

identifying each of said blocks based upon its relationship to the boundaries of said operator defined display area; and

wherein the step of classifying comprises the steps of:

determining which of said blocks a beginning point of said image fragment is contained within;

determining the direction in which said image fragment proceeds; and

repeating said steps for a second dimension.

3. Apparatus for detecting generation of an image within an operator defined display area (160), wherein a plurality of image picture elements are generated by a display system during each processing cycle for display on a display device (108) having a plurality of picture element positions, said plurality of image picture elements representing an image fragment (168), said apparatus comprising:

means (134) for classifying the image fragment (168) as totally within, totally outside or intersecting said operator defined area (160);

means (194) for generating a true detection signal (196) if said fragment (168) is totally within said area (160);

means (194) for generating a false detection signal (196) if said fragment (168) is totally outside said area (160);

means (190, 192) for generating a mask fragment for each boundary of said operator defined area (160) if said fragment (168) intersects said area (160), said mask fragment representing an edge of said operator defined area (160);

means (190, 192) for masking said image fragment (168) with each of said mask fragments;

means (194) for logically combining said masked image fragments; and,

means (194) for generating a true detection signal (196) if said logical combination contains non-zero values or otherwise, generating a false detection signal (196).

**Patentansprüche**

1. Ein Verfahren zum Erfassen der Generierung eines Bildes in einem vom Bediener definierten Anzeigebereich, in dem eine Vielzahl von Bilddarstellungselementen während jedes Verarbeitungszyklus zur Anzeige auf einer Anzeigevorrichtung von einem Anzeigesystem generiert werden, die eine Vielzahl von Bildelementpositionen aufweist, wobei diese Vielzahl von Bildelementen ein Bildfragment darstellen, wobei dieses Verfahren die folgenden Schritte aufweist:

Klassifizieren des Bildfragments als gänzlich innerhalb dieses bedienerdefinierten Bereichs liegend, gänzlich außerhalb dieses bedienerdefinierten Bereichs liegend, oder diesen bedienerdefinierten Bereich schneidend;

Generieren eines wahren Erfassungssignals, wenn das Fragment gänzlich innerhalb dieses Bereichs liegt;

Generieren eines falschen Erfassungssignals, wenn dieses Fragment gänzlich außerhalb des Bereichs liegt;

Durchführen der folgenden Schritte, wenn das Fragment den Bereich schneidet;

Generieren eines Maskenfragments für jede Grenze des bedienerdefinierten Bereichs, wobei dieses Maskenfragment einen Rand des bedienerdefinierten Bereichs darstellt;

Abdecken des Bildfragments mit jedem dieser Maskenfragmente;

logisches Kombinieren dieser abgedeckten Bildfragmente;

Generieren eines wahren Erfassungssignals, wenn diese logische Kombination Nicht-Null-Werte enthält, oder im anderen Fall, Generieren eines falschen Erfassungssignals.

2. Ein Verfahren gemäß Anspruch 1, in dem die Vielzahl der Bildelementpositionen auf der Anzeigevorrichtung in Blöcke unterteilt ist, die die gleiche Anzahl Bildelemente enthalten wie das Bildfragment; und

Identifizieren jedes dieser Blöcke auf der Grundlage ihres Verhältnisses zu den Grenzen des bedienerdefinierten Anzeigebereichs; und

in dem der Schritt des Klassifizierens die folgenden Schritte beinhaltet:

Festlegen, in welchem dieser Blöcke ein Anfangspunkt des Bildfragments enthalten ist;

Festlegen der Richtung, in der das Bildfragment fortschreitet; und

Wiederholen dieser Schritte für eine zweite Dimension.

3. Ein Gerät zum Erfassen der Generierung eines Bildes in einem bedienerdefinierten Anzeigebereich (160), in dem von einem Anzeigesystem eine Vielzahl von Bildelementen während jedes Verarbeitungszyklus zur Anzeigen auf einer Anzeigevorrichtung (108) mit einer Vielzahl von Bildelementpositionen generiert wird, wobei diese Vielzahl von Bildelementen ein Bildfragment (168) darstellt, und dieses Gerät umfaßt:

Mittel (134) zur Klassifizierung des Bildfragments (168) als ganz innerhalb dieses bedienerdefinierten Bereichs (160) liegend, ganz außerhalb dieses bedienerdefinierten Bereichs (160) liegend oder diesen bedienerdefinierten Bereich (160) schneidend;

Mittel (194) zum Generieren eines wahren Erfassungssignals (196), wenn dieses Fragment (168) ganz innerhalb dieses Bereichs (160) liegt;

Mittel (194) zum Generieren eines falschen Erfassungssignals (196), wenn dieses Fragment (168) ganz außerhalb dieses Bereichs (160) liegt;

Mittel (190, 192) zum Generieren eines Maskenfragments für jede Grenze dieses bedienerdefinierten Bereichs (160), wenn das Fragment (168) diesen Bereich (160) schneidet, wobei dieses Maskenfragment einen Rand des bedienerdefinierten Bereichs (160) darstellt;

Mittel (190, 192) zum Abdecken dieses Bildfragments (168) mit jedem der Maskenfragmente;

Mittel (194) zum logischen Kombinieren dieser abgedeckten Bildfragmente; und

Mittel (194) zum Generieren eines wahren Erfassungssignals (196), wenn diese logische Kombination Nicht-Null-Werte enthält, oder im anderen Fall, Generieren eines falschen Erfassungssignals (196).

**Revendications**

1. Un procédé de détection de la génération d'une image dans une aire d'affichage définie par un opérateur, dans lequel une pluralité d'éléments d'image sont générés par un système d'affichage pendant chaque cycle de traitement, pour être affichés sur un dispositif d'affichage comportant une pluralité de positions d'éléments d'image, ladite pluralité d'éléments d'image représentant un fragment d'image, ledit procédé comprenant les étapes consistant à :

   classer le fragment d'image comme se trouvant totalement à l'intérieur, se trouvant totalement à l'extérieur, ou coupant ladite aire définie par l'opérateur;
   générer un signal de détection vrai si ledit fragment se trouve totalement à l'intérieur de ladite aire;
   générer un signal de détection faux si ledit fragment se trouve totalement à l'extérieur de ladite aire;
   suivre les étapes suivantes si ledit fragment coupe ladite aire;
   générer un fragment de masque pour chaque limite de ladite aire définie par un opérateur, ledit fragment de masque représentant un bord de ladite aire définie par ledit opérateur;
   masquer ledit fragment d'image par chacun desdits fragments de masque;
   combiner logiquement lesdits fragments d'image masqués;
   générer un signal de détection vrai si ladite combinaison logique contient des valeurs différentes de zéro ou, autrement, générer un signal de détection faux.

2. Un procédé selon la revendication 1, dans lequel ladite pluralité de positions d'élément d'image sur ledit dispositif d'affichage sont divisées en blocs contenant le même nombre d'éléments d'image que ledit fragment d'image; et

   identifier chacun desdits blocs en se basant sur sa relation par rapport aux limites de ladite aire d'affichage définie par l'opérateur; et
   dans lequel l'étape de classement comprend les étapes consistant à :
   déterminer celui desdits blocs qui contient un point de commencement dudit fragment d'image;
   déterminer la direction dans laquelle évolue ledit fragment d'image; et
   répéter lesdites étapes dans une deuxième dimension.

3. Dispositif pour détecter la génération d'une image dans une aire d'affichage (160) définie par un opérateur, dans lequel une pluralité d'éléments d'image sont générés par un système d'affichage pendant chaque cycle de traitement, pour être affichés sur un dispositif d'affichage (108) comportant une pluralité de positions d'éléments d'image, ladite pluralité d'éléments d'image représentant un fragment d'image (168), ledit dispositif comprenant :

   un moyen (134) pour classer le fragment d'image (168) comme se trouvant totalement à l'intérieur, se trouvant totalement à l'extérieur, ou coupant ladite aire (160) définie par l'opérateur;
   un moyen (194) pour générer un signal de détection vrai (196) si ledit fragment (168) se trouve totalement à l'intérieur de ladite aire (160);
   un moyen (194) pour générer un signal de détection faux (196) si ledit fragment (168) se trouve totalement à l'extérieur de ladite aire (160);
   des moyens (190, 192) pour générer un fragment de masque pour chaque limite de ladite aire (160) définie par un opérateur, si ledit fragment (168) coupe ladite aire (160), ledit fragment de masque représentant un bord de ladite aire (160) définie par ledit opérateur;
   des moyens (190, 192) pour masquer ledit fragment d'image (168) par chacun desdits fragments de masque;
   un moyen (194) pour combiner logiquement lesdits fragments d'image masqués; et
   un moyen (194) pour générer un signal de détection vrai (196), si ladite combinaison contient des valeurs différentes de zéro ou, autrement, générer un signal de détection faux (196).

FIG.1

FIG.2

EP 0 425 171 B1

FIG.3

FIG.4

PRIOR ART

|← M →|

DY > DX
XSGN=1
YSGN=0

DY > DX
XSGN=0
YSGN=0

DY < DX
XSGN=1
YSGN=0

DY < DX
XSGN=0
YSGN=0

Ⓑ —150

DY < DX
XSGN=1
YSGN=1

DY < DX
XSGN=0
YSGN=1

DY > DX
XSGN=1
YSGN=1

DY > DX
XSGN=0
YSGN=1

## FIG.5

## FIG.6

WPIX φ−(M−1)

XPOS φ −(M−1)

YPOS φ−(M−1)

182  184          186  188

XMIN   XMAX          YMIN   YMAX

X ADDRESS → X MASKING LOGIC ←→ Y MASKING LOGIC ← Y ADDRESS

190          192

TRIVIAL OUT          TRIVIAL OUT

FINAL PICK SELECTION LOGIC          194

FIG.7

196          PICK SIGNAL

230
b o o o o

232

XMIN          XMAX

XMIN ( XMAX
236

XMIN ( XMAX          FIG.9

234

FIG.8

240

# TT REG.

242

#(N#−1) TO #(BM)

/N#−BM

/N#−BM

# TT(N#−1) TO
# TT(BM)

COMP    COMP    COMP

B# > B# TT+1
B# = B# TT+1

B# > B# TT
B# = B# TT
B# < B# TT

B# < B# TT−1
B# = B# TT−1

## FIG.10

#POS0−(M−1)

/M

0 1 2 3...M

D
E
C

SEL

MUX

#SGN    SEL

ADD/SUB

/N#        /N#

# ADDR REG.

## FIG.11

#0−(N#−1)